# EUROPÄISCHE PATENTSCHRIFT

(11) **EP 3 164 657 B1**
(45) Veröffentlichungstag und Bekanntmachung des Hinweises auf die Patenterteilung: **02.05.2018**
(21) Anmeldenummer: 15730467.6
(22) Anmeldetag: 16.06.2015
(51) Int. Cl.: F28D 20/00

(54) **ENERGIESPEICHEREINRICHTUNG ZUR ZWISCHENSPEICHERUNG VON THERMISCHER ENERGIE, KRAFTWERK MIT EINER ENERGIESPEICHEREINRICHTUNG SOWIE VERFAHREN ZUM BETREIBEN EINER ENERGIESPEICHEREINRICHTUNG**
ENERGY STORAGE DEVICE FOR TEMPORARILY STORING THERMAL ENERGY, POWER PLANT HAVING AN ENERGY STORAGE DEVICE, AND METHOD FOR OPERATING AN ENERGY STORAGE DEVICE
DISPOSITIF DE STOCKAGE D'ÉNERGIE POUR LE STOCKAGE INTERMÉDIAIRE D'ÉNERGIE THERMIQUE, CENTRALE ÉLECTRIQUE COMPORTANT UN DISPOSITIF DE STOCKAGE D'ÉNERGIE ET PROCÉDÉ POUR FAIRE FONCTIONNER UN DISPOSITIF DE STOCKAGE D'ÉNERGIE

(30) Priorität: 01.07.2014 DE 102014212676
(43) Veröffentlichungstag der Anmeldung: 10.05.2017
(73) Patentinhaber: Schierack Green Technology GmbH, 53501 Grafschaft (DE)
(72) Erfinder: HOLMIG, Rainer, 04808 Wurzen (DE); SCHIERACK, Horst, 53343 Wachtberg (DE)
(74) Vertreter: Dietz, Christopher Friedrich
(86) Internationale Anmeldenummer: PCT/EP2015/063426
(87) Internationale Veröffentlichungsnummer: WO 2016/000951

(56) Entgegenhaltungen:
- DE-A1- 2 724 416
- DE-A1- 3 115 988
- DE-A1- 19 825 677
- DE-A1-102010 034 294

## Beschreibung

Die Erfindung betrifft eine Energiespeichereinrichtung zur Zwischenspeicherung von thermischer Energie. Weiterhin betrifft sie ein Kraftwerk, insbesondere Solarkraftwerk, Windkraftwerk oder solarthermisches Windkraftwerk, mit wenigstens einer Energiespeichereinrichtung sowie ein Verfahren zum Betreiben einer Energiespeichereinrichtung.

Die Eingangs genannte Energiespeichereinrichtung kann in vielfältigen Einsatzbereichen Anwendung finden, um thermische Energie zwischenzuspeichern, also beispielsweise während eines ersten Zeitraums mit thermischer Energie zu beladen und während eines auf diesen ersten Zeitraum folgenden zweiten Zeitraums zu entladen. Mithilfe der Energiespeichereinrichtung wird insoweit während des ersten Zeitraums Energie aufgenommen, welche von einer Wärmequelle zur Verfügung gestellt wird. Während des zweiten Zeitraums wird die zwischengespeicherte thermische Energie wieder entnommen, um sie beispielsweise einem Wärmeverbraucher zuzuführen.

Insbesondere ist die Energiespeichereinrichtung dazu vorgesehen, lediglich periodisch zur Verfügung stehende thermische Energie zwischenzuspeichern, um sie wieder abzugeben, wenn die thermische Energie momentan nicht zur Verfügung steht. Beispielsweise ist die Energiespeichereinrichtung Bestandteil eines Kraftwerks, vorzugsweise eines Kraftwerks zur Stromerzeugung aus regenerativer Energie. Das Kraftwerk kann also beispielsweise ein Solarkraftwerk, ein Windkraftwerk oder ein Kombinationskraftwerk sein. Unter letzterem ist insbesondere ein solarthermisches Windkraftwerk zu verstehen. Dieses weist Mittel auf, um elektrische Energie und/oder thermische Energie aus mehreren regenerativen Energiequellen, vorzugsweise also sowohl aus Solarkraft als auch aus Windkraft, zu erzeugen. Dabei wird vorzugsweise diejenige regenerative Energiequelle verwendet, aus welcher momentan Energie bereitgestellt werden kann.

Es ist zwar bekannt, ein Solarkraftwerk mit einer Energiespeichereinrichtung auszurüsten. Beispielsweise wird dabei überschüssige thermische Energie in einem Salzspeicher zwischengespeichert. Dieser hat jedoch den Nachteil, dass die Temperatur des Speichermediums, nämlich Salz, bei der Entladung absinkt. Entsprechend nimmt die Effizienz der Energieerzeugung unter Verwendung der zwischengespeicherten Energie stetig ab. Während bei voller Energiespeichereinrichtung die Effizienz noch zufriedenstellend hoch sein kann, ist sie bereits bei lediglich geringfügig entladener Energiespeichereinrichtung deutlich geringer, weil die Temperatur beziehungsweise eine entsprechende Temperaturdifferenz zu einem niedrigeren Temperaturniveau abgesunken ist.

Zudem muss bei einer derartigen Energiespeichereinrichtung stets verhindert werden, dass die Temperatur des Speichermediums unter eine minimal zulässige Temperatur fällt. Wird diese unterschritten, so erstarrt das Speichermedium, was eine irreversible Beschädigung der Energiespeichereinrichtung zur Folge hat. Aus diesem Grund ist es üblicherweise vorgesehen, die Energiespeichereinrichtung zumindest zeitweise unter Verwendung von externer Wärme beziehungsweise externer Energie, also nicht solar erzeugter Energie, zu beheizen. Üblicherweise wird die externe Energie unter Verwendung von fossilen Energieträgern, beispielsweise Erdgas, bereitgestellt. Der Salzspeicher ist mithin auf die Verfügbarkeit von externer Energie angewiesen. Dies senkt jedoch die Effizienz der Energiespeichereinrichtung weiter. Zudem wird aufgrund der Verwendung von fossilen Energieträgern durch das Beheizen Kohlenstoffdioxid freigesetzt.

Es ist nun Aufgabe der Erfindung, eine Energiespeichereinrichtung vorzuschlagen, welche gegenüber bekannten Energiespeichereinrichtungen Vorteile aufweist, insbesondere eine hohe Speicherkapazität bei gleichzeitig geringem Bauraumbedarf zur Verfügung stellt.

Dies wird erfindungsgemäß mit einer Energiespeichereinrichtung mit den Merkmalen des Anspruchs 1 erreicht. Dabei ist ein geschlossener Speicherkreislauf vorgesehen, dem mittels einer Wärmequelle Wärme zuführbar, sowie mittels eines Wärmeverbrauchers Wärme entnehmbar ist und in dem ein Fluidbehälter vorliegt, der mittels eines verlagerbaren Trennelementes in eine erste Fluidspeicherkammer für kälteres Fluid und in eine zweite Fluidspeicherkammer für wärmeres Fluid aufgeteilt ist, wobei in dem Speicherkreislauf wenigstens eine Pumpe vorgesehen ist, mittels welcher Fluid aus der ersten Fluidspeicherkammer in die zweite Fluidspeicherkammer und/oder umgekehrt förderbar ist, und dass der Fluidbehälter als Rohrleitung mit waagerecht angeordneter und wenigstens bereichsweise gekrümmter Längsmittelachse vorliegt und ein Verhältnis zwischen Länge und Breite von mindestens 5 aufweist.

In dem geschlossenen Speicherkreislauf liegt das Fluid vor, welches mithilfe der Pumpe gefördert und auch als Speicherfluid bezeichnet werden kann. In dem Speicherkreislauf ist der Fluidbehälter vorgesehen. Dieser weist vorzugsweise ein Volumen auf, welches zur Zwischenspeicherung der gewünschten Energiemenge beziehungsweise Wärmemenge ausgelegt ist. Neben dem Fluidbehälter sind dem Speicherkreislauf vorzugsweise die Wärmequelle und der Wärmeverbraucher zugeordnet. Mit Hilfe der Wärmequelle kann thermische Energie, also Wärme, in den Speicherkreislauf eingebracht werden. Der Wärmeverbraucher dient dagegen dazu, thermische Energie, beziehungsweise Wärme aus dem Speicherkreislauf zu entnehmen. Die Wärmequelle und der Wärmeverbraucher können separate Einrichtungen sein. Es kann jedoch auch vorgesehen sein, dass die Wärmequelle und der Wärmeverbraucher von ein und derselben Einrichtung, beispielsweise einem Wärmetauscher oder dergleichen, ausgebildet sind.

In dem Fluidbehälter ist das Trennelement angeordnet, welches den Fluidbehälter in die erste Fluidspeicherkammer und die zweite Fluidspeicherkammer aufteilt. Das Trennelement ist derart verlagerbar, dass sowohl die erste Fluidspeicherkammer als auch die zweite Fluidspeicherkammer jeweils ein variables Volumen aufweisen. Insbesondere weist der Fluidbehälter an sich ein Gesamtvolumen auf, welches sich aus der Summe des Volumens der ersten Fluidspeicherkammer und des Volumens der zweiten Fluidspeicherkammer ergibt. Die erste Fluidspeicherkammer ist für kälteres Fluid, die zweite Fluidspeicherkammer für wärmeres Fluid oder umgekehrt vorgesehen.

Das bedeutet, dass in dem ersten Zeitraum, während welchem dem Speicherkreislauf mittels der Wärmequelle Wärme zugeführt wird, der ersten Fluidspeicherkammer kälteres Fluid entnommen wird, welches anschließend von der zugeführten Wärme aufgeheizt, also auf ein höheres Temperaturniveau gebracht wird. Anschließend wird das aufgeheizte und damit wärmere Fluid der zweiten Fluidspeicherkammer zugeführt. Dabei wird das Trennelement derart verlagert, dass die erste Fluidspeicherkammer kleiner und die zweite Fluidspeicherkammer größer wird, und zwar jeweils um das Volumen des entnommenen kälteren Fluids beziehungsweise das Volumen des zugeführten aufgeheizten Fluids.

Soll dagegen die zwischengespeicherte thermische Energie entnommen werden, so wird Fluid aus der zweiten Fluidspeicherkammer ausgebracht. Dieses Fluid wird nachfolgend mithilfe des Wärmeverbrauchers abgekühlt, also auf ein niedrigeres Temperaturniveau gebracht. Anschließend wird das abgekühlte und mithin kältere Fluid der ersten Fluidspeicherkammer zugeführt. Das Trennelement wird dabei derart verlagert, dass die erste Fluidspeicherkammer größer wird, die zweite Fluidspeicherkammer jedoch kleiner. Die Vergrößerung der ersten Fluidspeicherkammer beziehungsweise die Verkleinerung der zweiten Fluidspeicherkammer erfolgt dabei jeweils um das Volumen des entnommenen wärmeren Fluids beziehungsweise des zugeführten abgekühlten Fluids.

Zum Fördern des Fluids aus der ersten Fluidspeicherkammer in Richtung der zweiten Fluidspeicherkammer beziehungsweise in die zweite Fluidspeicherkammer oder umgekehrt ist die wenigstens eine Pumpe vorgesehen. Diese liegt in dem geschlossenen Speicherkreislauf vor, vorzugsweise außerhalb des Fluidbehälters. Alternativ kann sie selbstredend auch in diesen integriert sein.

Der Fluidbehälter kann grundsätzlich eine beliebige Form ausweisen. Besonders bevorzugt weist er entlang seiner Längsmittelachse einen kreisrunden Querschnitt auf. Beispielsweise verläuft die Längsmittelachse gerade, sodass der Fluidbehälter insoweit in Form eines Zylinders, insbesondere eines Kreiszylinders, vorliegt. Erfindungsgemäß ist die Längsmittelachse jedoch wenigstens bereichsweise gekrümmt, sodass der Fluidbehälter beispielsweise eine U-Form oder eine O-Form aufweist. Im letzteren Fall ist der Fluidbehälter also ringförmig oder oval. Im Falle der O-Form können Stirnseiten des Fluidbehälters unmittelbar benachbart oder beabstandet zueinander angeordnet sein.

Auch eine Doppel-U-Form des Fluidbehälters beziehungsweise eine Stadionform des Fluidbehälters kann realisiert sein. Dabei sind zwei U-förmige Teilabschnitte des Fluidbehälters gegenüberliegend angeordnet, sodass die freien Schenkel der Teilabschnitte aufeinander zu ragen beziehungsweise einander gegenüberliegen, insbesondere miteinander fluchten. Zumindest ein Paar der einander gegenüberliegenden Schenkel kann strömungstechnisch aneinander angeschlossen sein, bevorzugt ist dies für alle jeweils einander gegenüberliegenden Schenkel der Fall.

Anders ausgedrückt ist der Fluidbehälter stadionförmig und verfügt über zwei Teilabschnitte mit zueinander parallelen und geraden Längsmittelachsen. Diese geraden Teilabschnitte sind an ihren sich jeweils am nächsten liegenden Enden über Teilabschnitte des Fluidbehälters verbunden, die über gekrümmte Längsmittelachsen verfügen, insbesondere teilkreisförmig, beispielsweise halbkreisförmig sind. Vorzugsweise sind die geraden Teilabschnitte gleich lang. Dies kann zusätzlich oder alternativ auch für die gekrümmten Teilabschnitte der Fall sein.

Bei der Doppel-U-Form kann es vorgesehen sein, dass lediglich zwei der Schenkel der Teilabschnitte miteinander in Strömungsverbindung stehen, während die beiden anderen Schenkel strömungsgetrennt sind. Dabei können Stirnseiten der strömungsgetrennten Schenkel unmittelbar benachbart oder beabstandet zueinander angeordnet sein. Im Falle der Stadionform kann einer der geraden Teilabschnitte unterbrochen sein, sodass auch hier die beiden Stirnseiten vorliegen.

Es kann jedoch auch vorgesehen sein, dass der Fluidbehälter als Ringkammer, insbesondere als Kreisringkammer vorliegt. In diesem Fall sind bevorzugt mehrere Trennelemente, insbesondere wenigstens zwei Trennelemente, in dem Fluidbehälter angeordnet, um die erste Fluidspeicherkammer fluidtechnisch vollständig von der zweiten Fluidspeicherkammer zu trennen. Im Falle der Ringkammer weist der Fluidbehälter eine durchgehende, also nicht unterbrochene Längsmittelachse auf. Beispielsweise ist wenigstens eines der in dem Fluidbehälter angeordneten Trennelemente verlagerbar, insbesondere sind mehrere oder alle der mehreren Trennelemente in dem Fluidbehälter verlagerbar angeordnet. Es kann zudem vorgesehen sein, dass wenigstens eines der Trennelemente ortsfest in dem Fluidbehälter angeordnet ist oder zumindest mittels einer geeigneten Einrichtung in dem Fluidbehälter temporär festsetzbar ist.

Besonders bevorzugt ist die Ausgestaltung als Ringkammer bei der O-Form sowie der Doppel-U-Form beziehungsweise Stadionform des Fluidbehälters. In Fall der Doppel-U-Form ist beispielsweise in jedem der U-förmigen Teilabschnitte ein Trennelement angeordnet, wobei zumindest eines der Trennelemente, insbesondere alle Trennelemente verlagerbar sind. Beispielsweise sind die Trennelemente derart angeordnet, dass sie nur in demjenigen Teilabschnitt verlagerbar sind, welchem sie zugeordnet sind. Es ist insoweit wenigstens ein Endanschlag vorgesehen, der das Übertreten der Trennelemente aus dem Teilabschnitt, welchem sie zugeordnet sind, in den jeweils anderen Teilabschnitt verhindert. Im Falle der Stadionform kann es auch vorgesehen sein, dass die Trennelemente lediglich in den geraden Teilabschnitten verlagerbar sind und ein Übertreten in die gekrümmten Teilabschnitte jeweils verhindert wird, beispielsweise mittels des wenigstens einen Endanschlags.

Die Anordnung der Längsmittelachse ist grundsätzlich beliebig wählbar. Gemäß der Erfindung ist sie waagerecht angeordnet, insbesondere also parallel oder wenigstens bereichsweise parallel zu einem Untergrund, auf oder unter welchem die Energiespeichereinrichtung angeordnet ist. Grundsätzlich kann die Längsmittelachse des Fluidbehälters jedoch unter einem beliebigen Winkel bezüglich des Untergrunds angeordnet sein, insbesondere einem Winkel von mindestens 0° und höchstens 90°. Das bedeutet also, dass der Fluidbehälter beziehungsweise seine Längsmittelachse senkrecht angeordnet beziehungsweise ausgerichtet sein kann. In diesem Fall steht die Längsmittelachse senkrecht auf dem Untergrund.

Bei einer derartigen Anordnung ist es insbesondere möglich, Dichteunterschiede des Fluids zwischen der ersten Fluidspeicherkammer und der zweiten Fluidspeicherkammer auszunutzen, um die Effizienz der Energiespeichereinrichtung zu erhöhen. Zudem ermöglicht die vertikale Anordnung des Fluidbehälters beziehungsweise die entsprechende Ausrichtung seiner Längsmittelachse eine besonders zuverlässige Führung und/oder Lagerung des Trennelements.

Auch das Fluid kann beliebig gewählt sein. Bevorzugt weist es jedoch eine hohe Wärmekapazität auf. Beispielsweise wird Wasser als Fluid verwendet. Dem Wasser kann wenigstens ein Zusatzstoff zugegeben werden, beispielsweise Ethylenglycol oder dergleichen. Beispielsweise liegt das Fluid in dem Fluidbehälter bei einem Druck vor, welcher kleiner ist als der kritische Druck. Zusätzlich oder alternativ ist die Temperatur des Fluids in dem Speicherkreislauf stets kleiner als die kritische Temperatur des Fluids. Der Druck des Fluids ist vorzugsweise größer als ein Umgebungsdruck und kann beispielsweise wenigstens 10 bar, wenigstens 25 bar, wenigstens 50 bar, wenigstens 75 bar oder wenigstens 100 bar betragen. Bezogen auf den kritischen Druck des Fluids kann der Druck des Fluids beispielsweise mindestens 25 %, mindestens 50 %, mindestens 75 % oder mindestens 90 % betragen. Der Fluidbehälter liegt insoweit als Fluiddruckbehälter vor.

Die maximale Temperatur des Fluids in der zweiten Fluidspeicherkammer kann insbesondere bei aufgeladener Wärmespeichereinrichtung wenigstens 100 °C, wenigstens 150° C, wenigstens 200 °C, wenigstens 250 °C oder wenigstens 300 °C betragen. Die Temperatur des Fluids in der zweiten Fluidspeicherkammer wird derart eingestellt, insbesondere steuernd und/oder regelnd eingestellt, dass sie die maximale Temperatur nicht übersteigt. Die maximale Temperatur ist besonders bevorzugt derart gewählt, dass es bei dem Druck, unter welchem es in dem Speicherkreislauf vorliegt, auch bei der maximalen Temperatur flüssig ist, also nicht verdampft. Bezogen auf die kritische Temperatur des Fluids beträgt die maximale Temperatur beispielsweise mindestens 50 %, mindestens 75 %, mindestens 80 %, mindestens 85 %, mindestens 90 % oder mindestens 95 %.

Die vorgestellte Energiespeichereinrichtung hat den Vorteil, dass sie einen äußerst geringen Bauraumbedarf aufweist, jedoch gleichzeitig eine strikte Trennung zwischen kälterem Fluid und wärmerem Fluid ermöglicht. Es wird also nicht, wie dies häufig der Fall ist, einem Speicherbehälter Fluid entnommen, welches nachfolgend aufgewärmt und erneut dem Speicherbehälter zugeführt wird. Bei einer derartigen Vorgehensweise kann zwar ebenso die thermische Energie gespeichert werden, die Temperatur des in dem Speicherbehälter vorliegenden Fluids steigt jedoch während des Aufheizens mithilfe der Wärmquelle nur vergleichsweise langsam an.

Steht nun eine nicht für ein vollständiges Beladen ausreichende Wärmemenge zur Verfügung, so kann das Fluid in dem Speicherbehälter nicht auf seine maximale Temperatur gebracht werden. Dies führt jedoch dazu, dass auch dem Wärmeverbraucher lediglich Fluid mit einer vergleichsweise geringen Temperatur zugeführt werden kann. Typische Wärmeverbraucher, beispielsweise ein Wärmetauscher oder auch eine Dampfturbine arbeiten jedoch umso effizienter, je höher die Temperatur des ihm zugeführten Fluids beziehungsweise eine Temperaturdifferenz zu einem niedrigeren Temperaturniveau ist.

Dieses Problem wird mit der erfindungsgemäßen Energiespeichereinrichtung gelöst, indem das kältere Fluid der ersten Fluidspeicherkammer entnommen, aufgeheizt und dann der zweiten Fluidspeicherkammer zugeführt wird, sodass in letzterer stets Fluid mit nahezu derjenigen Temperatur vorliegt, auf welche es zuvor mithilfe der Wärmequelle gebracht wurde. Es findet also keine Vermischung mit dem kälteren Fluid statt. Mithin steht auch dem Wärmeverbraucher nachfolgend stets Fluid mit der höheren Temperatur zur Verfügung. Besonders bevorzugt ist es daher zusätzlich vorgesehen, dass der Fluidbehälter gegenüber seiner Außenumgebung wärmeisoliert ist, also eine Wärmeisolierung aufweist, welche ihn vorzugsweise vollständig umgreift.

Die beschriebene Energiespeichereinrichtung ermöglicht ein äußerst effizientes und kostengünstiges Zwischenspeichern von thermischer Energie. Durch die im Wesentlichen gleichbleibende Temperatur des Fluids in der zweiten Fluidspeicherkammer bleibt auch die verfügbare Enthalpie im Wesentlichen konstant. Somit wird eine hohe spezifische Speicherkapazität - bezogen auf das Volumen des Fluidbehälters - erzielt, was wiederum zu niedrigen Kosten der Energiespeichereinrichtung, bezogen auf die Kapazität in kWh, führt. Zudem muss der Energiespeichereinrichtung keine externe Wärme zugeführt werden, um einen zuverlässigen Betrieb sicherzustellen. Insoweit arbeitet sie völlig klimaneutral, insbesondere ohne Freisetzung von Kohlenstoffdioxid.

Ist die Energiespeichereinrichtung dem Kraftwerk zugeordnet, welches als Windkraftwerk oder als Kombinationskraftwerk ausgestaltet ist, so können Mittel vorgesehen sein, die mittels Windkraft erzeugte elektrische Energie in Wärme umzuwandeln, die anschließend in der Energiespeichereinrichtung zwischengespeichert wird.

In einer weiteren Ausgestaltung der Erfindung ist vorgesehen, dass der Fluidbehälter als Rohrleitung und das Trennelement als Molch oder als Trennscheibe vorliegt. Die Rohrleitung weist dabei bevorzugt den vorstehend bereits beschriebenen kreisrunden Querschnitt bezüglich ihrer Längsmittelachse auf, wobei letztere jedoch einen beliebigen Verlauf aufweisen kann. Insbesondere ist die Längsmittelachse gerade oder ist wenigstens bereichsweise gekrümmt, sodass die Rohrleitung die ebenfalls bereits erläuterte U-Form oder O-Form aufweist.

Der Fluidbehälter verfügt dabei über ein Volumen, welches wenigstens 10 %, wenigstens 20 %, wenigstens 30 %, wenigstens 40 %, wenigstens 50 %, wenigstens 60 %, wenigstens 70 %, wenigstens 75 %, wenigstens 80 %, wenigstens 90 % oder wenigstens 95 % des Gesamtvolumens des geschlossenen Speicherkreislaufs entspricht. Besonders bevorzugt ist es also vorgesehen, dass in dem Fluidbehälter ein größeres Fluidvolumen vorliegt als in weiteren Bereichen des Speicherkreislaufs. Um den Bauraum des Fluidbehälters möglichst günstig zu nutzen, ist der Fluidbehälter, also sowohl die erste Fluidspeicherkammer als auch die zweite Fluidspeicherkammer stets zumindest größtenteils, also zu mindestens 50 %, mindestens 60 %, mindestens 70 %, mindestens 80 %, mindestens 90 % oder mindestens 95 %, oder vollständig mit Fluid gefüllt.

Bei der Ausgestaltung des Fluidbehälters als Rohrleitung ist es bevorzugt zudem vorgesehen, dass ein bestimmtes Verhältnis zwischen Länge und Breite des Fluidbehälters vorliegt. Unter der Länge des Fluidbehälters ist seine Erstreckung in Richtung der Längsmittelachse zu verstehen, während die Breite die Abmessungen des Fluidbehälters senkrecht zu der Längsmittelachse beschreibt. Zum Beispiel ist der Fluidbehälter im Querschnitt bezüglich der Längsmittelachse rund. In diesem Fall entspricht die Breite dem Durchmesser des Fluidbehälters. Vorzugsweise ist die Breite beziehungsweise der Durchmesser entlang der Längsmittelachse, insbesondere über die gesamte Länge des Fluidbehälters hinweg, konstant oder zumindest nahezu konstant.

Bevorzugt ist der Fluidbehälter deutlich länger als breit. Das Verhältnis zwischen Länge und Breite beziehungsweise zwischen Länge und Durchmesser beträgt mindestens 5, mindestens 10, mindestens 15, mindestens 20 oder mindestens 25. Selbstverständlich kann der Fluidbehälter jedoch auch deutlich länger sein als sich aus den genannten Verhältnissen ergibt. Vorzugsweise liegt der Fluidbehälter nach Art einer Pipeline vor, also als lange Rohrleitung, welche ein Verhältnis zwischen Länge und Breite beziehungsweise Durchmesser von mindestens 50, mindestens 75 oder mindestens 100 aufweist.

Ist der Fluidbehälter stadionförmig gemäß den vorstehenden Ausführungen, so ist die Länge jedes der geraden Teilabschnitte vorzugsweise größer als die Länge jedes der gekrümmten Teilabschnitte. Beispielsweise beträgt das Verhältnis zwischen der Länge der geraden Teilabschnitte und der Länge der gekrümmten Teilabschnitte mindestens 2, mindestens 2,5, mindestens 5, mindestens 7,5 oder mindestens 10.

Das Trennelement kann als Molch ausgestaltet sein. Molche werden üblicherweise als Reinigungs- oder Inspektionsgeräte für Pipelines, insbesondere Gas- oder Erdölpipelines eingesetzt. Der Molch füllt insbesondere den gesamten Querschnitt des Fluidbehälters aus, und trennt mithin die erste Fluidspeicherkammer von der zweiten Fluidspeicherkammer ab. Besonders bevorzugt ist der Molch für eine vollständige oder zumindest nahezu vollständige Abdichtung zwischen den beiden Fluidspeicherkammern ausgestaltet. Der Molch liegt insoweit als Trennmolch vor.

Alternativ kann das Trennelement auch als Trennscheibe ausgeführt sein. Vorzugsweise weist die Trennscheibe zwei zueinander parallele Flächen auf, wobei eine der Flächen der ersten Fluidspeicherkammer und eine zweite der Flächen der zweiten Fluidspeicherkammer zugewandt ist. Die Trennscheibe ist derart ausgestaltet, dass die erste Fläche die erste Fluidspeicherkammer und die zweite Fläche die zweite Fluidspeicherkammer im Wesentlichen dicht abschließt. Während die den Fluidspeicherkammern zugewandten Seiten beziehungsweise Stirnseiten des Molchs gekrümmt beziehungsweise gerundet sein können, sind also die Flächen, welche als Stirnseiten der Trennscheibe vorliegen können, parallel zueinander angeordnet. Die Trennscheibe liegt insoweit vorzugsweise in Form eines Zylinders, insbesondere eines Kreiszylinders, vor.

Die Verlagerung des Trennelements beziehungsweise des Molchs in dem Fluidbehälter wird vorzugsweise mittels Fluiddruck bewirkt, welcher von der Pumpe erzeugt wird. Das bedeutet, dass das Trennelement sich selbsttätig bewegt, sobald einer der Fluidspeicherkammern Fluid entnommen und der anderen zugeführt wird. Selbstverständlich kann es jedoch auch vorgesehen sein, dass das Trennelement eine Antriebseinrichtung oder dergleichen aufweist, mittels welcher eine Verlagerung bewirkt wird. Insbesondere kann es vorgesehen sein, dass das Trennelement als Pumpe oder als Teil einer Pumpe verwendet wird, welche insoweit die vorstehend erwähnte Pumpe ersetzt.

Beispielsweise verfügt das Trennelement über eine Antriebseinrichtung, die es zur Förderung des Fluids beziehungsweise zur Erzeugung von Fluiddruck verlagert. Die Antriebseinrichtung kann an dem Trennelement selbst vorliegen und beispielsweise als Elektromotor ausgestaltet sein. Dieser wird beispielsweise drahtgebunden, bevorzugt jedoch drahtlos, mit Energie versorgt. Ebenso kann die Antriebseinrichtung wenigstens einen Magnet, insbesondere Elektromagnet, umfassen, der innerhalb oder außerhalb des Fluidbehälters angeordnet ist und eine auf die Verlagerung des Trennelements gerichtete Magnetkraft auf das Trennelement bewirkt.

Wird bei einer derartigen Ausführungsform das Trennelement verlagert, so verringert sich das Volumen einer der Fluidspeicherkammern, während sich das Volumen der anderen vergrößert. Entsprechend nimmt der Druck in der erstgenannten Fluidspeicherkammer zu, während er in der zuletzt genannten Fluidspeicherkammer abnimmt. Dies bewirkt eine Strömung des Fluid von derjenigen Fluidspeicherkammer, in welcher der höhere Druck vorliegt, in diejenige Fluidspeicherkammer mit dem geringeren Druck.

Eine bevorzugte Ausgestaltung der Erfindung sieht vor, dass das Trennelement zur thermischen Isolierung der ersten Fluidspeicherkammer von der zweiten Fluidspeicherkammer als mit einem Isoliergas gefüllter Hohlkörper ausgebildet ist. Über das Trennelement hinweg liegt eine große Temperaturdifferenz vor, weil auf der einen Seite des Trennelements das kältere Fluid und auf der gegenüberliegenden Seite das wärmere Fluid angrenzt. Um Wärmeverluste durch Wärmeübertragung, ausgehend von dem wärmeren Fluid hin zu dem kälteren Fluid zu vermeiden, ist das Trennelement mit einer thermischen Isolierung versehen.

Diese thermische Isolierung liegt besonders bevorzugt in Form eines Hohlraums vor, welcher mit dem Isoliergas gefüllt ist. Das Trennelement liegt insoweit als Hohlkörper vor. Der Hohlraum erstreckt sich - im Querschnitt gesehen - vorzugsweise über den größten Teil des Trennelements, insbesondere weist er - wiederum im Querschnitt gesehen - eine Fläche auf, welche mindestens 50 %, mindestens 60 %, mindestens 70 %, mindestens 80 %, mindestens 90 % oder mindestens 95 % der Querschnittsfläche des Trennelements oder des Fluidbehälters entspricht.

Als Isoliergas kann grundsätzlich jedes beliebige Gas verwendet werden. Beispielsweise kommt Stickstoff, insbesondere gasförmiger Stickstoff, zum Einsatz. Alternativ kann der Hohlraum auch evakuiert werden, sodass er als Vakuumhohlraum in dem Trennelement vorliegt. Es kann auch vorgesehen sein, dass mehrere fluidtechnisch voneinander getrennte, nebeneinanderliegende Hohlräume vorgesehen sein, welche jeweils entweder evakuiert oder mit dem Isoliergas gefüllt sind.

Eine Weiterbildung der Erfindung sieht vor, dass das Trennelement zur fluidtechnischen Abdichtung der ersten Fluidspeicherkammer von der zweiten Fluidspeicherkammer wenigstens eine Dichtlippe aufweist. Um einerseits die fluidtechnische Abdichtung und andererseits eine einfache Verlagerbarkeit des Trennelements in dem Fluidbehälter zu gewährleisten, weist das Trennelement die Dichtlippe auf, welche dichtend an der Innenkontur des Fluidbehälters anliegt. Die Dichtlippe erstreckt sich beispielsweise ausgehend von einem Trennkörper des Trennelements, wobei in dem Trennkörper besonders bevorzugt die vorstehend erläuterte Hohlkammer ausgebildet ist, in der das Isoliergas vorliegen kann.

Die Dichtlippe umgreift den Trennkörper besonders bevorzugt in Umfangsrichtung vollständig, ist also in diese Richtung durchgehend ausgebildet. Mithin liegt sie in Umfangsrichtung durchgehend an der Innenkontur des Fluidbehälters an. Es kann vorgesehen sein, dass lediglich eine einzige Dichtlippe vorliegt. Besonders bevorzugt sind jedoch in axialer Richtung beabstandet zueinander angeordnete Dichtlippen vorgesehen, insbesondere wenigstens zwei Dichtlippen, wenigstens drei Dichtlippen oder wenigstens vier Dichtlippen. Jede dieser Dichtlippen ist bevorzugt auf die vorstehend beschriebene Art und Weise in Umfangsrichtung durchgehend ausgebildet. Mit einer derartigen Ausgestaltung des Trennelements werden die beiden Fluidspeicherkammern fluidtechnisch zuverlässig voneinander getrennt. Dies verbessert auch die thermische Isolierung, weil keine Vermischung des in der ersten Fluidspeicherkammer vorliegenden kälteren Fluids mit dem in der zweiten Fluidkammer vorliegenden wärmeren Fluid auftreten kann.

Eine besonders bevorzugte Ausgestaltung der Erfindung sieht vor, dass die erste Fluidspeicherkammer einen ersten Fluidanschluss und die zweite Fluidspeicherkammer einen zweiten Fluidanschluss aufweist, wobei an die Fluidanschlüsse der Wärmeverbraucher angeschlossen und mit der als Speicherentladepumpe ausgebildeten Pumpe fluidtechnisch in Reihe geschaltet ist. Die Fluidanschlüsse dienen dazu, dem Fluidbehälter Fluid zu entnehmen beziehungsweise zuzuführen. Bei einem Beladen der Energiespeichereinrichtung wird also der ersten Fluidspeicherkammer durch den ersten Fluidanschluss kälteres Fluid entnommen, dieses erwärmt und anschließend durch den zweiten Fluidanschluss der zweiten Fluidspeicherkammer zugeführt. Zum Entladen wird dagegen das wärmere Fluid durch den zweiten Fluidanschluss entnommen, abgekühlt und anschließend der ersten Fluidspeicherkammer durch den ersten Fluidanschluss wieder zugeführt.

An die Fluidanschlüsse sind die Wärmequelle und/oder der Wärmeverbraucher angeschlossen. Im Falle des Wärmeverbrauchers ist die vorstehend beschriebene Pumpe als Speicherentladepumpe ausgeführt, welche mit dem Wärmeverbraucher in Reihe geschaltet ist. Die Speicherentladepumpe dient mithin dazu, Fluid durch den zweiten Fluidanschluss aus dem Fluidbehälter heraus, anschließend durch den Wärmeverbraucher und nachfolgend durch den ersten Fluidanschluss wieder in den Fluidbehälter hinein zu fördern.

Die Speicherentladepumpe und der Wärmeverbraucher sind fluidtechnisch zwischen den Fluidanschlüssen vorgesehen. Anders ausgedrückt sind die Fluidanschlüsse über die Speicherentladepumpe und den Wärmeverbraucher fluidtechnisch miteinander verbunden. Vorzugsweise weisen die Fluidanschlüsse jeweils einen kleineren Querschnitt beziehungsweise Durchströmungsquerschnitt auf als der Fluidbehälter. Zum Beispiel ist an die Fluidanschlüsse jeweils auf ihrer dem Fluidbehälter abgewandten Seite eine Fluidleitung angeschlossen, die einen kleineren Querschnitt aufweist als der Fluidbehälter beziehungsweise die Rohrleitung.

In einer weiteren Ausgestaltung der Erfindung ist vorgesehen, dass an die Fluidanschlüsse die Wärmequelle angeschlossen und mit einer Speicherladepumpe fluidtechnisch in Reihe geschaltet ist. Die Wärmequelle kann zusätzlich oder alternativ zu der vorstehend beschriebenen Ausgestaltung vorgesehen sein. Die Wärmequelle liegt in Reihe zu der Speicherladepumpe vor. Die Speicherladepumpe ist entsprechend dazu ausgeführt, Fluid durch den ersten Fluidanschluss aus dem Fluidbehälter zu entnehmen, durch die Wärmequelle zu fördern und anschließend durch den zweiten Fluidanschluss wieder dem Fluidbehälter zuzuführen. Besonders bevorzugt liegen sowohl die Speicherladepumpe als auch die Speicherentladepumpe vor, wobei diese fluidtechnisch parallel zueinander angeordnet sein können.

Schließlich kann vorgesehen sein, dass der Wärmeverbraucher und die Speicherentladepumpe in einem ersten Fluidstrang und die Wärmequelle und die Speicherladepumpe in einem fluidtechnisch parallel zu dem ersten Fluidstrang angeordneten zweiten Fluidstrang angeordnet sind. Die beiden Fluidanschlüsse des Fluidbehälters sind dabei jeweils sowohl über den ersten Fluidstrang als auch über den zweiten Fluidstrang miteinander strömungstechnisch verbunden. Zwischen den Fluidanschlüssen strömendes Fluid kann entsprechend entweder durch den ersten Fluidstrang oder den zweiten Fluidstrang strömen. Dies ist davon abhängig, welche der Pumpen betrieben wird beziehungsweise davon, ob dem Speicherkreislauf Wärme zugeführt oder entnommen werden soll.

Zusätzlich oder alternativ kann vorgesehen sein, dass der Wärmeverbraucher und/oder die Wärmequelle als Wärmetauscher ausgebildet sind/ist. Es kann vorgesehen sein, dass das in dem Speicherkreislauf vorliegende Fluid nicht ausschließlich zur Zwischenspeicherung der thermischen Energie, sondern auch beispielsweise als Arbeitsfluid in einem Arbeitskreislauf und/oder als Solarfluid in einem Solarkreislauf dient. Besonders bevorzugt ist es jedoch vorgesehen, dass der Speicherkreislauf strömungstechnisch von dem Arbeitskreislauf, dem Solarkreislauf oder beiden vollständig getrennt ist. Insoweit ist beispielsweise der Wärmeverbraucher als Wärmetauscher ausgebildet, über welchen der Speicherkreislauf thermisch mit dem Arbeitskreislauf gekoppelt ist. In dem Arbeitskreislauf liegt das Arbeitsfluid vor. Das in dem Speicherkreislauf vorliegende Fluid kann zur deutlicheren Abgrenzung gegenüber diesem auch als Speicherfluid bezeichnet werden. Analog dazu kann auch die Wärmequelle als Wärmetauscher vorliegen, über den der Speicherkreislauf thermisch mit beispielsweise dem Solarkreislauf gekoppelt ist. In dem Solarkreislauf liegt dabei das Solarfluid vor.

Die Erfindung betrifft weiterhin ein Kraftwerk, insbesondere Solarkraftwerk, Windkraftwerk oder solarthermisches Windkraftwerk, mit wenigstens einer Energiespeichereinrichtung zur Zwischenspeicherung von thermischer Energie, insbesondere gemäß den vorstehenden Ausführungen. Dabei ist vorgesehen, dass die Energiespeichereinrichtung einen geschlossenen Speicherkreislauf aufweist, dem mittels einer Wärmequelle Wärme zuführbar sowie mittels eines Wärmeverbrauchers Wärme entnehmbar ist und in dem ein Fluidbehälter vorliegt, der mittels eines verlagerbaren Trennelements in eine erste Fluidspeicherkammer für kälteres Fluid und eine zweite Fluidspeicherkammer für wärmeres Fluid aufgeteilt ist, wobei in dem Speicherkreislauf wenigstens eine Pumpe vorgesehen ist, mittels welcher Fluid aus der ersten Fluidspeicherkammer in die zweite Fluidspeicherkammer und/oder umgekehrt förderbar ist, wobei der Fluidbehälter als Rohrleitung mit waagerecht angeordneter und wenigstens bereichsweise gekrümmter Längsmittelachse vorliegt und ein Verhältnis zwischen Länge und Breite von mindestens 5 aufweist. Auf die Vorteile einer derartigen Ausgestaltung der Energiespeichereinrichtung und des Kraftwerks wurde bereits eingegangen. Sowohl das Kraftwerk als auch die Energiespeichereinrichtung können gemäß den vorstehenden Ausführungen weitergebildet sein, so dass insoweit auf diese verwiesen wird.

In einer besonders bevorzugten Weiterbildung der Erfindung ist vorgesehen, dass die erste Fluidspeicherkammer einen ersten Fluidanschluss und die zweite Fluidspeicherkammer einen zweiten Fluidanschluss aufweist, wobei an die Fluidanschlüsse wenigstens ein mit der als Speicherentladepumpe ausgebildeten Pumpe in Reihe geschalteter Wärmeverbraucher angeschlossen ist, wobei der Wärmeverbraucher als Wärmetauscher zwischen dem Speicherkreislauf und einem zumindest eine Turbine aufweisenden Arbeitskreislauf vorliegt.

Wie bereits erläutert, dient der Wärmeverbraucher dazu, dem Fluid des Speicherkreislaufs Wärme zu entnehmen. Zu diesem Zweck wird die Speicherentladepumpe betrieben, welche das wärmere Fluid aus der zweiten Fluidspeicherkammer über den Wärmeverbraucher in die erste Fluidspeicherkammer fördert. Der Wärmeverbraucher ist als Wärmetauscher ausgebildet, welcher dazu dient, den Speicherkreislauf thermisch mit dem Arbeitskreislauf zu koppeln, insbesondere auf die vorstehend erläuterte Art und Weise. Mithin kann mithilfe des Wärmetauschers und der in dem Speicherkreislauf vorliegenden thermischen Energie das in dem Arbeitskreislauf vorliegende Arbeitsfluid erwärmt, insbesondere verdampft und/oder überhitzt werden. Anschließend kann das Arbeitsfluid durch die Turbine strömen und diese zum Erzeugen von mechanischer Energie und schlussendlich elektrischer Energie antreiben.

Alternativ ist es selbstverständlich auch möglich, dass der Speicherkreislauf strömungstechnisch nicht von dem Arbeitskreislauf getrennt ist beziehungsweise der Arbeitskreislauf einen Teil des geschlossenen Speicherkreislaufs darstellt. In diesem Fall kann der Turbine unmittelbar das in dem Speicherkreislauf vorliegende Fluid beziehungsweise Speicherfluid mithilfe der Speicherentladepumpe zugeführt werden. Die Turbine liegt dabei vorzugsweise in dem vorstehend erläuterten ersten Fluidstrang vor.

Die Erfindung betrifft schließlich ein Verfahren zum Betreiben einer Energiespeichereinrichtung zum Zwischenspeichern von thermischer Energie, insbesondere einer Energiespeichereinrichtung gemäß den vorstehenden Ausführungen. Die Energiespeichereinrichtung kann beispielsweise Bestandteil eines Kraftwerks, insbesondere des bereits erläuterten Kraftwerks sein. Es ist vorgesehen, dass die Energiespeichereinrichtung einen geschlossenen Speicherkreislauf aufweist, dem mittels einer Wärmequelle Wärme zuführbar sowie mittels eines Wärmeverbrauchers Wärme entnehmbar ist und in dem Fluidbehälter vorliegt, der mittels eines verlagerbaren Trennelements in eine erste Fluidspeicherkammer für kälteres Fluid und eine zweite Fluidspeicherkammer für wärmeres Fluid aufgeteilt wird, wobei in dem Speicherkreislauf wenigstens eine Pumpe vorgesehen ist, mittels welcher Fluid aus der ersten Fluidspeicherkammer in die zweite Fluidspeicherkammer und/oder umgekehrt gefördert wird, wobei der Fluidbehälter als Rohrleitung mit waagerecht angeordneter und wenigstens bereichsweise gekrümmter Längsmittelachse vorliegt und ein Verhältnis zwischen Länge und Breite von mindestens 5 aufweist. Die Energiespeichereinrichtung, die zum Umsetzen des Verfahrens dient, ist beispielsweise Bestandteil eines Kraftwerks. Hinsichtlich des Verfahrens, der Energiespeichereinrichtung und des Kraftwerks wird auf die weitere Beschreibung verwiesen.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Darstellung einer erfindungsgemäßen ersten Ausführungsform einer Energiespeichereinrichtung zur Zwischenspeicherung von thermischer Energie, und
- Figur 2: eine schematische Darstellung einer nicht erfindungsgemäßen zweiten Ausführungsform der Energiespeichereinrichtung.

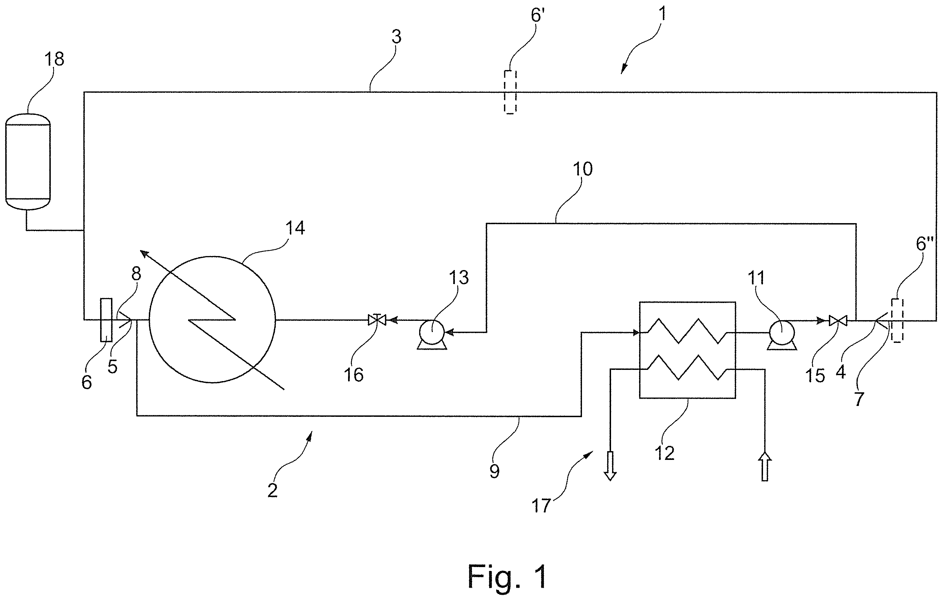

Die Figur 1 zeigt eine erfindungsgemäße erste Ausführungsform einer Energiespeichereinrichtung 1, die zur Zwischenspeicherung von thermischer Energie beziehungsweise Wärme dient. Die Energiespeichereinrichtung verfügt über einen geschlossenen Speicherkreislauf 2. In dem Speicherkreislauf 2 ist ein Fluidbehälter 3 vorgesehen, welcher hier in Form einer Rohrleitung ausgestaltet ist. Der Fluidbehälter 3 weist einen ersten Fluidanschluss 4 und einen zweiten Fluidanschluss 5 auf.

Der Fluidbehälter 3 beziehungsweise die Rohrleitung, die den Fluidbehälter 3 ausbildet, kann grundsätzlich beliebig ausgestaltet sein. Bevorzugt weist sie bezüglich ihrer Längsmittelachse einen Kreisquerschnitt auf, wobei die Längsmittelachse beliebig geformt sein kann. In der hier dargestellten Ausführungsform weisen die Längsmittelachse und mithin auch der Fluidbehälter 3 eine C-Form auf.

Die nicht speziell gekennzeichnete Längsmittelachse des Fluidbehälters 3 ist in der hier dargestellten Ausführungsform vorzugsweise waagerecht angeordnet, insbesondere also parallel zu einem Untergrund, auf welchem oder unter welchem die Energiespeichereinrichtung 1 wenigstens bereichsweise, insbesondere vollständig, angeordnet ist. Anders ausgedrückt kann es vorgesehen sein, dass die Längsmittelachse senkrecht zu einem Schwerkrafteinfluss beziehungsweise einem Schwerkraftvektor vorliegt.

Die Fluidanschlüsse 4 und 5 sind vorzugsweise Ausnehmungen in einer Wandung des Fluidbehälters 3, welche deutlich geringere Abmessungen aufweisen als der Fluidbehälter 3 im Querschnitt. Beispielsweise liegen die Fluidanschlüsse 4 und 5 an Stirnseiten des Fluidbehälters 3 beziehungsweise der Rohrleitung vor, insbesondere an gegenüberliegenden Stirnseiten.

In dem Fluidbehälter 3 ist ein Trennelement 6 verlagerbar angeordnet, wobei weitere mögliche Anordnungen des Trennelements 6 durch die Bezugszeichen 6' und 6" gekennzeichnet sind. Das Trennelement 6 trennt den Fluidbehälter 3 in eine erste Fluidspeicherkammer 7 sowie eine zweite Fluidspeicherkammer 8.

Auf der dem Fluidbehälter 3 abgewandten Seite der Fluidanschlüsse 4 und 5 sind zwischen diesen ein erster Fluidstrang 9 und ein zweiter Fluidstrang 10 strömungstechnisch angeschlossen. In dem ersten Fluidstrang 9 liegt eine Pumpe 11 vor, die als Speicherentladepumpe ausgebildet ist, sowie ein Wärmeverbraucher 12, der als Wärmetauscher ausgebildet ist. Der zweite Fluidstrang 10 dagegen verfügt über eine Pumpe 13, die als Speicherladepumpe ausgestaltet ist, sowie eine Wärmequelle 14. Jedem der Fluidstränge 9 und 10 kann zudem ein Ventil 15 beziehungsweise 16 zugeordnet sein.

Der Wärmeverbraucher 12 dient zur thermischen Kopplung des Speicherkreislaufs 2 an einem Arbeitskreislauf 17, welcher hier lediglich ansatzweise dargestellt ist. In dem Arbeitskreislauf 17 liegt ein Arbeitsfluid vor, welches sowohl den Wärmeverbraucher 12 beziehungsweise den Wärmetauscher sowie eine Dampfturbine durchströmt beziehungsweise durchströmen kann. Selbstverständlich ist es möglich, den Arbeitskreislauf 17 als Teil des Speicherkreislaufs 2 auszubilden. In diesem Fall liegt der Wärmeverbraucher 12 nicht als Wärmetauscher, sondern beispielsweise als Turbine vor, um unmittelbar mit dem in dem Speicherkreislauf 2 vorliegenden Fluid beziehungsweise Speicherfluid mechanische Energie beziehungsweise elektrische Energie zu erzeugen.

Die Wärmequelle 14 ist beispielsweise ebenfalls als Wärmetauscher ausgestaltet und dient insbesondere der thermischen Kopplung des Speicherkreislaufs 2 an einem Solarkreislauf, in welchem vorzugsweise wenigstens ein Solarkollektor vorliegt. Selbstverständlich kann es auch vorgesehen sein, dass die Wärmequelle 14 der wenigstens eine Solarkollektor selbst ist und insoweit das in dem Speicherkreislauf 2 vorliegende Fluid, welches auch als Speicherfluid bezeichnet werden kann, bei einem Durchströmen des zweiten Fluidstrangs 10 den wenigstens einen Solarkollektor durchströmt. Erkennbar ist zudem, dass der Speicherkreislauf 2 über wenigstens einen Ausgleichsbehälter 18 verfügt, welcher beispielsweise an den Fluidbehälter 3 fluidtechnisch angeschlossen ist.

Das Trennelement 6 ist in dem Fluidbehälter 3 verlagerbar angeordnet, sodass das Volumen der ersten Fluidspeicherkammer 7 und das Volumen der zweiten Fluidspeicherkammer 8 variabel sind. Insbesondere ergibt die Summe aus den Volumina der beiden Fluidspeicherkammern 7 und 8 jedoch unabhängig von der Position des Trennelements 6 stets ein Gesamtvolumen des Fluidbehälters 3, welches zur Aufnahme des Fluids beziehungsweise Speicherfluids zur Verfügung steht.

Bei einem Betreiben der Energiespeichereinrichtung 1 kann nun entweder ein Beladen, also das Zuführen von thermischer Energie, oder ein Entladen, also das Entnehmen von thermischer Energie, vorgesehen sein. Zum Beladen der Energiespeichereinrichtung 1 mit thermischer Energie wird die Speicherladepumpe 13 betrieben, sodass Fluid entlang des zweiten Fluidstrangs 10 gefördert wird. Dazu wird das Ventil 16 geöffnet. Vorzugsweise wird gleichzeitig das Ventil 15 geschlossen.

Das Trennelement 6 befindet sich zunächst in der durch das Bezugszeichen 6 gekennzeichneten Stellung. Durch das Betreiben der Speicherladepumpe 13 wird das Fluid aus der ersten Fluidspeicherkammer 7 entnommen und durch die Wärmequelle 14 hindurch in die zweite Fluidspeicherkammer 8 gepumpt. Durch den dabei in den Fluidspeicherkammern 7 und 8 entstehenden Druckunterschied wird das Trennelement 6 verlagert. Entsprechend nimmt das Volumen der zweiten Fluidspeicherkammer 8 zu, während das Volumen der ersten Fluidspeicherkammer 7 abnimmt. Das Trennelement 6 wird also in Richtung der durch die Bezugszeichen 6' und 6" angedeuteten Positionen verlagert.

Die Speicherladepumpe 13 wird vorzugsweise solange betrieben, wie mittels der Wärmequelle 14 Wärme beziehungsweise thermische Energie bereitgestellt werden kann oder bis die Energiespeichereinrichtung 1 maximal mit thermischer Energie beladen ist, das gesamte in dem Fluidbehälter 3 vorliegende Fluid also die maximale Temperatur erreicht hat. In letzterem Fall liegt das Trennelement 6 in der durch das Bezugszeichen 6" gekennzeichneten Stellung vor. Nun wird die Speicherladepumpe 13 außer Betrieb gesetzt und vorzugsweise das Ventil 16 geschlossen.

Soll der Energiespeichereinrichtung 1 die nunmehr zwischengespeicherte thermische Energie entnommen werden, so wird die Speicherentladepumpe 11 betrieben und das Ventil 15 geöffnet. Vorzugsweise wird gleichzeitig das Ventil 16 geschlossen, sollte dies noch nicht der Fall sein. Durch das Betreiben der Speicherentladepumpe 11 wird Fluid aus der zweiten Fluidspeicherkammer 8 entnommen und durch den Wärmeverbraucher 12 in die Fluidspeicherkammer 7 gefördert. Entsprechend verändern sich das Volumen der ersten Fluidspeicherkammer 7 und das Volumen der zweiten Fluidspeicherkammer 8 nun in umgekehrter Weise bezüglich der vorstehenden Ausführungen.

In dem Wärmeverbraucher 12 wird das aus der zweiten Fluidspeicherkammer 8 entnommene Fluid abgekühlt. Die dem Fluid dabei entnommene Wärme dient dem Aufheizen, insbesondere dem Verdampfen und/oder Überhitzen, des in dem Arbeitskreislaufs 7 vorliegenden Arbeitsfluids. Das erhitzte Arbeitsfluid kann nachfolgend zum Erzeugen von mechanischer Energie und letztendlich elektrischer Energie herangezogen werden. Das Entladen der Energiespeichereinrichtung 1 erfolgt beispielsweise solange, wie der Wärmeverbraucher 12 thermische Energie benötigt oder bis die zweite Fluidspeicherkammer 8 vollständig entleert ist, das Trennelement 6 sich also in der durch das Bezugszeichen 6 gekennzeichneten Stellung befindet.

Eine derartige Ausgestaltung der Energiespeichereinrichtung 1 hat den Vorteil, dass der Bauraum des Fluidbehälters 3 vergleichsweise gering ist. Insbesondere muss kein leerer Speicherbehälter vorgehalten werden, um das aufgeheizte oder abgekühlte Fluid aufzunehmen. Gleichzeitig ermöglicht das Trennelement 6 eine vollständige oder zumindest nahezu vollständige Trennung des in der ersten Fluidspeicherkammer 7 vorliegenden kälteren Fluid von dem in der zweiten Fluidspeicherkammer 8 vorliegenden wärmeren Fluid. Eine Vermischung des wärmeren Fluids mit dem kälteren Fluid und eine damit einhergehende Abkühlung werden somit vermieden. Entsprechend steht das wärmere Fluid stets mit einer hohen Temperatur zur Verfügung, was das Betreiben des Arbeitskreislaufs 17 mit einer hohen Effizienz ermöglicht.

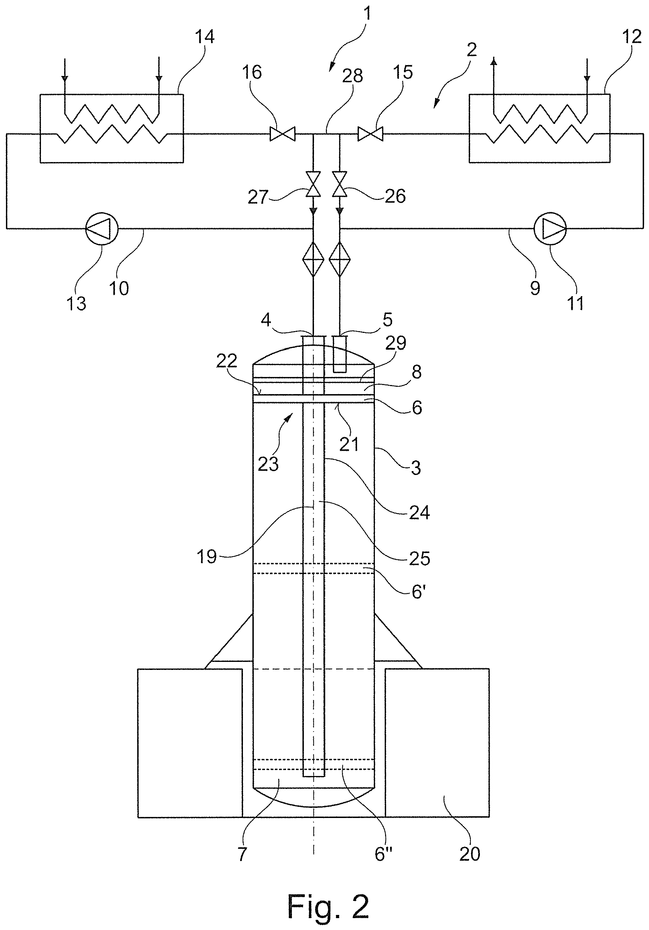

Die Figur 2 zeigt eine nicht erfindungsgemäße zweite Ausführungsform der Energiespeichereinrichtung 1. Grundsätzlich wird auf die vorstehenden Ausführungen zu der ersten Ausführungsform verwiesen. Auf die Unterschiede zu dieser wird nachfolgend eingegangen. Ein wesentlicher Unterschied liegt darin, dass die Längsmittelachse 19 des Fluidbehälters 3 senkrecht angeordnet ist, insbesondere also auf dem vorstehend erwähnten Untergrund senkrecht steht. Beispielsweise verläuft die Längsmittelachse 19 parallel zu dem Schwerkrafteinfluss beziehungsweise dem Schwerkraftvektor.

Der Fluidbehälter 3 weist insoweit beispielsweise eine Höhe auf, welche größer ist als seine Breite und/oder seine Tiefe, insbesondere als sein Durchmesser. Bei einer derartigen Ausführungsform verläuft die Längsmittelachse 19 vorzugsweise gerade, sodass der Fluidbehälter 3 beziehungsweise seine Längsmittelachse vorzugsweise krümmungslos ausgeführt ist. Der Fluidbehälter 3 kann beispielsweise mittels eines Fundaments 20 befestigt sein. Er kann oberirdisch, insbesondere vollständig oberirdisch, alternativ jedoch auch unterirdisch, insbesondere vollständig unterirdisch, angeordnet sein.

Das Trennelement 6 wird beispielsweise von einer Trennscheibe gebildet, welche vorzugsweise kreisrund ist. Sie weist beispielsweise eine erste Fläche 21 sowie eine dieser gegenüberliegende zweite Fläche 22 auf. Die erste Fläche 21 ist dabei der ersten Fluidspeicherkammer 7, die zweite Fläche 22 der zweiten Fluidspeicherkammer 8 zugewandt. Die Flächen 21 und 22 verlaufen vorzugsweise parallel zueinander, insbesondere über den gesamten Querschnitt des Fluidbehälters 3.

Um eine besonders zuverlässige Führung des Trennelements 6 zu gewährleisten, ist eine Lagerung 23 vorgesehen. Der Lagerung 23 ist eine Ausnehmung, insbesondere eine zentrale Ausnehmung, des Trennelements 6 sowie ein Führungselement 24 zugeordnet. Das Führungselement 24 ist beispielsweise zentral in dem Fluidbehälter 3 angeordnet und durchgreift diesen in dessen Längsrichtung vorzugsweise größtenteils oder sogar vollständig. Unter ersterem ist dabei eine Längserstreckung des Führungselements 24 zu verstehen, welche bevorzugt mindestens 80 %, mindestens 85 %, mindestens 90 % oder mindestens 95 % der Längserstreckung des Fluidbehälters 3 beziehungsweise der Höhe des Fluidbehälters 3 entspricht.

Das Führungselement 24 wird in dem hier vorliegenden Ausführungsbeispiel von einem Rohr 25 ausgebildet, durch welches eine Fluidverbindung zwischen der Fluidspeicherkammer 7 und dem Fluidanschluss 4 realisiert ist. Über das Rohr 25 mündet also der Fluidanschluss 4 direkt beziehungsweise unmittelbar in die Fluidspeicherkammer 7 ein. Der Fluidanschluss 5 mündet dagegen unmittelbar in die Fluidspeicherkammer 8 sein. Mithilfe des Rohrs 25 können die Fluidanschlüsse 4 und 5 an derselben Stirnseite des Fluidbehälters 3 angeordnet sein.

Wie bereits vorstehend für die erste Ausführungsform erläutert, sind die Fluidanschlüsse 4 und 5 sowohl über den ersten Fluidstrang 9 als auch über den zweiten Fluidstrang 10 miteinander strömungsverbunden beziehungsweise strömungsverbindbar. Zusätzlich zu den Ventilen 15 und 16 können Ventile 26 und 27 vorgesehen sein. Für ein Beladen der Energiespeichereinrichtung ist es beispielsweise vorgesehen, mithilfe der Pumpe 13 Fluid aus der ersten Fluidspeicherkammer 7 in Richtung der Wärmequelle 14 beziehungsweise durch diese hindurch zu fördern und anschließend über den Fluidanschluss 5 der zweiten Fluidspeicherkammer 8 zuzuführen. Zu diesem Zweck sind die Ventile 16 und 26 geöffnet, während die Ventile 15 und 27 geschlossen sind.

Um die Energiespeichereinrichtung 1 zu entladen, wird dagegen Fluid mithilfe der Pumpe 11 aus der zweiten Fluidspeicherkammer 8 in Richtung des Wärmeverbrauchers 12 beziehungsweise durch diesen hindurch gefördert und anschließend über den Fluidanschluss 4 der ersten Fluidspeicherkammer 7 zugeführt. Dabei sind beispielsweise die Ventile 15 und 27 geöffnet, während vorzugsweise die Ventile 16 und 26 geschlossen sind.

Um eine entsprechende Strömungsführung zu ermöglichen, treffen die Fluidstränge 9 und 10 an einer Kreuzungsstelle 28 aufeinander. Dabei liegt das Ventil strömungstechnisch zwischen der Kreuzungsstelle 28 und dem Wärmeverbraucher 12 vor, während das Ventil 16 strömungstechnisch zwischen der Kreuzungsstelle 28 und der Wärmequelle 14 angeordnet ist. Weiterhin liegt das Ventil 26 strömungstechnisch zwischen der Kreuzungsstelle 28 und dem Fluidanschluss 5 sowie das Ventil 27 strömungstechnisch zwischen der Kreuzungsstelle 28 und dem Fluidanschluss 4 vor. Mithilfe der vorstehend erläuterten Anordnung und Schaltung der Ventile 15, 16, 26 und 27 kann insoweit die gewünschte Strömung zum wahlweisen Beladen und Entladen der Energiespeichereinrichtung 1 erzielt werden.

Um eine zuverlässige Strömungsführung des Fluids innerhalb des Fluidbehälters 3 zu gewährleisten, kann strömungstechnisch zwischen dem Fluidanschluss 5 und der Fluidspeicherkammer 8 ein Schwallblech 29 oder ein Schwallkäfig vorgesehen sein, über welches das in die Fluidspeicherkammer 8 eingebrachte Fluid strömt. Das Schwallblech beziehungsweise der Schwallkäfig wird beispielsweise von einer Trennwand gebildet, die durchbrochen ist und insoweit Strömungsöffnungen für das Fluid aufweist.

Mit der hier vorgestellten zweiten Ausführungsform der Energiespeichereinrichtung 1 können grundsätzlich dieselben Vorteile erzielt werden wie unter Verwendung der ersten Ausführungsform. Durch die vertikale Anordnung des Fluidbehälters 3 kann die Energiespeichereinrichtung 1 mit einer besonders geringen Grundfläche realisiert werden. Zudem können bei dem Beladen und/oder Entladen der Energiespeichereinrichtung 1 Dichteunterschiede zwischen dem kälteren Fluid in der ersten Fluidspeicherkammer 7 und dem wärmeren Fluid in der zweiten Fluidspeicherkammer 8 ausgenutzt werden.

## Patentansprüche

1. Energiespeichereinrichtung (1) zur Zwischenspeicherung von thermischer Energie, mit einem geschlossenen Speicherkreislauf (2), dem mittels einer Wärmequelle (14) Wärme zuführbar sowie mittels eines Wärmeverbrauchers (12) Wärme entnehmbar ist und in dem ein Fluidbehälter (3) vorliegt, der mittels eines verlagerbaren Trennelements (6) in eine erste Fluidspeicherkammer (7) für kälteres Fluid und eine zweite Fluidspeicherkammer (8) für wärmeres Fluid aufgeteilt ist, wobei in dem Speicherkreislauf (2) wenigstens eine Pumpe (11) vorgesehen ist, mittels welcher Fluid aus der ersten Fluidspeicherkammer (7) in die zweite Fluidspeicherkammer (8) und/oder umgekehrt förderbar ist, **dadurch gekennzeichnet, dass** der Fluidbehälter (3) als Rohrleitung mit waagrecht angeordneter und wenigstens bereichsweise gekrümmter Längsmittelachse vorliegt und ein Verhältnis zwischen Länge und Breite von mindestens fünf aufweist.

2. Energiespeichereinrichtung nach Anspruch 1, **dadurch gekennzeichnet, dass** das Trennelement (6) als Molch oder als Trennscheibe vorliegt.

3. Energiespeichereinrichtung nach einem der vorhergehenden Ansprüche, **dadurch gekennzeichnet, dass** das Trennelement (6) zur thermischen Isolierung der ersten Fluidspeicherkammer (7) von der zweiten Fluidspeicherkammer (8) als mit einem Isoliergas gefüllter Hohlkörper ausgebildet ist.

4. Energiespeichereinrichtung nach einem der vorhergehenden Ansprüche, **dadurch gekennzeichnet, dass** das Trennelement (6) zur fluidtechnischen Abdichtung der ersten Fluidspeicherkammer (7) von der zweiten Fluidspeicherkammer (8) wenigstens eine Dichtlippe aufweist.

5. Energiespeichereinrichtung nach einem der vorhergehenden Ansprüche, **dadurch gekennzeichnet, dass** die erste Fluidspeicherkammer (7) einen ersten Fluidanschluss (4) und die zweite Fluidspeicherkammer (8) einen zweiten Fluidanschluss (5) aufweist, wobei an die Fluidanschlüsse (4,5) der Wärmeverbraucher (12) angeschlossen und mit der als Speicherentladepumpe ausgebildeten Pumpe (11) fluidtechnisch in Reihe geschaltet ist.

6. Energiespeichereinrichtung nach einem der vorhergehenden Ansprüche, **dadurch gekennzeichnet, dass** an die Fluidanschlüsse (4,5) die Wärmequelle (14) angeschlossen und mit einer Speicherladepumpe (13) fluidtechnisch in Reihe geschaltet ist.

7. Energiespeichereinrichtung nach einem der vorhergehenden Ansprüche, **dadurch gekennzeichnet, dass** der Wärmeverbraucher (12) und die Speicherentladepumpe (11) in einem ersten Fluidstrang und die Wärmequelle (14) und die Speicherladepumpe (13) in einem fluidtechnisch parallel zu dem ersten Fluidstrang (9) angeordneten zweiten Fluidstrang (10) angeordnet sind.

8. Kraftwerk, insbesondere Solarkraftwerk, Windkraftwerk oder solarthermisches Windkraftwerk, mit wenigstens einer Energiespeichereinrichtung (1) zur Zwischenspeicherung von thermischer Energie nach einem oder mehreren der vorhergehenden Ansprüche.

9. Kraftwerk nach Anspruch 8, **dadurch gekennzeichnet, dass** die erste Fluidspeicherkammer (7) einen ersten Fluidanschluss (4) und die zweite Fluidspeicherkammer (8) einen zweiten Fluidanschluss (5) aufweist, wobei an die Fluidanschlüsse (4,5) wenigstens ein mit der Speicherentladepumpe ausgebildete Pumpe (11) in Reihe geschalteter Wärmeverbraucher (12) angeschlossen ist, wobei der Wärmeverbraucher (12) als Wärmetauscher zwischen dem Speicherkreislauf (2) und einem zumindest eine Turbine aufweisenden Arbeitskreislauf (17) vorliegt.

10. Verfahren zum Betreiben einer Energiespeichereinrichtung (1) zum Zwischenspeichern von thermischer Energie nach einem oder mehreren der vorhergehenden Ansprüche, **dadurch gekennzeichnet, dass** die Energiespeichereinrichtung (1) einen geschlossenen Speicherkreislauf (2) aufweist, dem mittels einer Wärmequelle (14) Wärme zuführbar sowie mittels eines Wärmeverbrauchers (12) Wärme entnehmbar ist und in dem ein Fluidbehälter (3) vorliegt, der mittels eines verlagerbaren Trennelements (6) in eine erste Fluidspeicherkammer (7) für kälteres Fluid und eine zweite Fluidspeicherkammer (8) für wärmeres Fluid aufgeteilt wird, wobei in dem Speicherkreislauf (2) wenigstens eine Pumpe (11) vorgesehen ist, mittels welcher Fluid aus der ersten Fluidspeicherkammer (7) in die zweite Fluidspeicherkammer (8) und/oder umgekehrt gefördert wird, und dass der Fluidbehälter (3) als Rohrleitung mit waagrecht angeordneter und wenigstens bereichsweise gekrümmter Längsmittelachse vorliegt und ein Verhältnis zwischen Länge und Breite von mindestens fünf aufweist.

## Claims

1. An energy storage device (1) for temporarily storing thermal energy, having a closed storage circuit (2) to which heat can be supplied by means of a heat source (14) and from which heat can be withdrawn by means of a heat consumer (12), and in which a fluid container (3) is present which is divided into a first fluid storage chamber (7) for colder fluid and a second fluid storage chamber (8) for warmer fluid by means of a displaceable separating element (6), wherein at least one pump (11) by means of which fluid can be conveyed from the first fluid storage chamber (7) into the second fluid storage chamber (8), and/or vice versa, is provided in the storage circuit (2), **characterized in that** the fluid container (3) is present as a pipeline having a horizontally arranged longitudinal centre axis that is curved, at least in areas, and having a length-to-width ratio of at least five.

2. The energy storage device according to claim 1, **characterized in that** the separating element (6) is present as a pig or as a separating disk.

3. The energy storage device according to one of the preceding claims, **characterized in that** the separating element (6) is designed for thermally insulating the first fluid storage chamber (7) from the second fluid storage chamber (8) as a hollow body that is filled with an insulating gas.

4. The energy storage device according to one of the preceding claims, **characterized in that** the separating element (6) has at least one sealing lip for fluidically sealing off the first fluid storage chamber (7) from the second fluid storage chamber (8).

5. The energy storage device according to one of the preceding claims, **characterized in that** the first fluid storage chamber (7) has a first fluid connector (4) and the second fluid storage chamber (8) has a second fluid connector (5), the heat consumer (12) being connected to the fluid connectors (4, 5) and being fluidically connected in series with the pump (11), designed as a storage discharge pump.

6. The energy storage device according to one of the preceding claims, **characterized in that** the heat source (14) is connected to the fluid connectors (4, 5), and is fluidically connected in series with a storage charge pump (13).

7. The energy storage device according to one of the preceding claims, **characterized in that** the heat consumer (12) and the storage discharge pump (11) are situated in a first fluid train, and the heat source (14) and the storage charge pump (13) are situated in a second fluid train (10) that is fluidically situated in parallel to the first fluid train (9).

8. A power plant, in particular a solar power plant, wind power plant, or solar thermal-wind power plant, having at least one energy storage device (1) for temporarily storing thermal energy according to one or more of the preceding claims.

9. The power plant according to claim 8, **characterized in that** the first fluid storage chamber (7) has a first fluid connector (4) and the second fluid storage chamber (8) has a second fluid connector (5), wherein at least one heat consumer (12) that is connected in series with the pump (11) designed as a storage discharge pump is connected to the fluid connectors (4, 5), the heat consumer (12) being present as a heat exchanger between the storage circuit (2) and a working circuit (17) having at least one turbine.

10. A method for operating an energy storage device (1) for temporarily storing thermal energy according to one or more of the preceding claims, **characterized in that** the energy storage device (1) has a closed storage circuit (2) to which heat can be supplied by means of a heat source (14) and from which heat can be withdrawn by means of a heat consumer (12), and in which a fluid container (3) is present which is divided into a first fluid storage chamber (7) for colder fluid and a second fluid storage chamber (8) for warmer fluid by means of a displaceable separating element (6), wherein at least one pump (11) by means of which fluid is conveyed from the first fluid storage chamber (7) into the second fluid storage chamber (8), and/or vice versa, is provided in the storage circuit (2), and the fluid container (3) is present as a pipeline having a horizontally arranged longitudinal centre axis that is curved, at least in areas, and having a length-to-width ratio of at least five.

## Revendications

1. Dispositif de stockage d'énergie (1) destiné au stockage intermédiaire d'énergie thermique, comportant un circuit de stockage (2) fermé, auquel de la chaleur peut être amenée au moyen d'une source de chaleur (14) et duquel de la chaleur peut être prélevée au moyen d'un consommateur de chaleur (12) et dans lequel se trouve un récipient de fluide (3), qui est divisé au moyen d'un élément de séparation (6) déplaçable dans une première chambre de stockage de fluide (7) destinée à un fluide plus froid et une deuxième chambre de stockage de fluide (8) destinée à un fluide plus chaud, dans lequel circuit de stockage (2) est prévu au moins une pompe (11) qui permet de refouler du fluide de la première chambre de stockage de fluide (7) dans la deuxième chambre de stockage de fluide (8) et/ou inversement, **caractérisé en ce que** le récipient de fluide (3) est prévu sous la forme d'une conduite tubulaire dont l'axe central longitudinal est horizontal et au moins partiellement recourbé, et présente un rapport entre longueur et largeur d'au moins cinq.

2. Dispositif de stockage d'énergie selon la revendication 1, **caractérisé en ce que** l'élément de séparation (6) est prévue en écouvillon ou en disque séparateur.

3. Dispositif de stockage d'énergie selon l'une des revendications précédentes, **caractérisé en ce que** l'élément de séparation (6) pour isoler thermiquement la première chambre de stockage de fluide (7) de la deuxième chambre de stockage de fluide (8) est réalisé sous la forme d'un corps creux rempli de gaz isolant.

4. Dispositif de stockage d'énergie selon l'une des revendications précédentes, **caractérisé en ce que** l'élément de séparation (6) étanchéifiant aux fluides la première chambre de stockage de fluide (7) de la deuxième chambre de stockage de fluide (8) présente au moins une lèvre d'étanchéité.

5. Dispositif de stockage d'énergie selon l'une des revendications précédentes, **caractérisé en ce que** la première chambre de stockage de fluide (7) présente un premier raccord de fluide (4) et la deuxième chambre de stockage de fluide (8) présente un deuxième raccord de fluide (5), le consommateur de chaleur (12) étant raccordé aux raccords de fluide (4,5) et étant monté fluidiquement en série avec la pompe (11) réalisée sous la forme d'une pompe de décharge de stockage.

6. Dispositif de stockage d'énergie selon l'une des revendications précédentes, **caractérisé en ce que** la source de chaleur (14) est raccordée aux raccords de fluide (4,5) et est montée en série sur le plan fluidique avec une pompe de charge de stockage (13).

7. Dispositif de stockage d'énergie selon l'une des revendications précédentes, **caractérisé en ce que** le consommateur de chaleur (12) et la pompe de décharge de stockage (11) sont disposés dans une première ligne de fluide et la source de chaleur (14) ainsi que la pompe de charge de stockage (13) le sont disposés dans une deuxième ligne de fluide (10) agencée parallèlement sur le plan fluidique à la première ligne de fluide (9).

8. Centrale électrique, en particulier centrale électrique solaire, centrale électrique éolienne ou centrale électrique éolienne thermique solaire comportant au moins un dispositif de stockage d'énergie (1) destinée au stockage intermédiaire d'énergie thermique selon l'une ou plusieurs des revendications précédentes.

9. Centrale électrique selon la revendication 8, **caractérisée en ce que** la première chambre de stockage de fluide (7) présente un premier raccord de fluide (4) et la deuxième chambre de stockage de fluide (8) présente un deuxième raccord de fluide (5), au moins un consommateur de chaleur (12) raccordé en série avec la pompe (11) réalisée sous la forme d'une pompe à décharge de stockage, étant raccordé aux raccords de fluide (4,5), le consommateur de chaleur (12) étant prévu sous la forme d'un échangeur de chaleur entre le circuit de stockage (2) et un circuit de travail (17) présentant au moins une turbine.

10. Procédé d'exploitation d'un dispositif de stockage d'énergie (1) destiné au stockage intermédiaire d'énergie thermique selon l'une ou plusieurs des revendications précédentes, **caractérisé en ce que** le dispositif de stockage d'énergie (1) présente un circuit de stockage (2) fermé, auquel de la chaleur peut être amenée au moyen d'une source de chaleur (14) et duquel de la chaleur peut être prélevée au moyen d'un consommateur de chaleur (12) et dans lequel est prévu un récipient de fluide (3) qui est divisé au moyen d'un élément de séparation mobile (6) en une première chambre de stockage de fluide (7) destinée à un fluide plus froid et une seconde chambre de stockage de fluide (8) destinée à un fluide plus chaud, dans lequel circuit de stockage (2) est prévu au moins une pompe (11) qui permet de refouler du fluide de la première chambre de stockage de fluide (7) dans la seconde chambre de stockage de fluide (8) et/ou inversement, et **en ce que** le récipient de fluide (3) est prévu sous la forme d'une conduite tubulaire dont l'axe central longitudinal est horizontal et au moins partiellement recourbé et présente un rapport entre longueur et largeur d'au moins cinq.
